# EUROPÄISCHE PATENTANMELDUNG

(11) **EP 0 961 256 A2**
(43) Veröffentlichungstag der Anmeldung: **01.12.1999**
(21) Anmeldenummer: 99112606.1
(22) Anmeldetag: 13.06.1995
(51) Int. Cl.: G09F 3/02

(54) **Etikett mit integrierter Codierung**

(30) Priorität: 29.06.1994 DE 9410522 U
(62) Teilanmeldung aus: 95109141.2
(71) Anmelder: Steinbeis Packaging GmbH, 83098 Brannenburg (DE)
(72) Erfinder: Schönfelder, Helmut, 83626 Unterdarching/Valley (DE); Haag, Wilhelm, 85521 Ottobrunn (DE); Wiedemann, Otto, 82319 Starnberg (DE)
(74) Vertreter: Liska, Horst, Dr.-Ing.

(57) **Zusammenfassung**

Haftetikett für einen zu etikettierenden Gegenstand, wobei das Haftetikett durch die Lage wenigstens einer Grenze (509) zwischen einer elektrisch leitfähigen Schicht (523) und einer darüberliegenden, elektrisch nicht leitfähigen Schicht (519) Eigenschaften des Gegenstands maschinell lesbar codiert, **dadurch gekennzeichnet,** daß die leitfähige Schicht (523) von einer weiteren leitfähigen Schutzschicht (521), die die Oxidation der darunter liegenden leitfähigen Schicht (523) hemmt und selbst entweder nicht oxidiert oder deren Oxid die Leitfähigkeit im wesentlichen nicht beeinträchtigt, bedeckt ist.

## Beschreibung

Die Erfindung betrifft ein Haftetikett für einen zu etikettierenden Gegenstand, insbesondere für eine Filmpatrone (z.B. Kleinbildfilm) für Fotoapparate, wobei das Haftetikett durch die Lage wenigstens einer Grenze zwischen einer elektrisch leitfähigen Schicht und einer darüberliegenden, elektrisch nicht leitfähigen Schicht Eigenschaften des Gegenstands, insbesondere eines Films in der Filmpatrone, maschinell lesbar codiert. Die Codierung kann eine sog. CAS("Camera Auto Sensing")- Codierung sein, die Informationen über den enthaltenen fotografischen Film - Filmempfindlichkeit, Filmlänge und Belichtungsspielraum - enthält.

Die Codierung erfolgt durch definierte Anordnung elektrisch leitender und nichtleitender Felder bzw. deren gemeinsamer Grenzen an festgelegter Stelle auf der Filmpatrone, wobei die elektrisch leitenden Felder miteinander elektrisch leitfähig verbunden sind. Die Informationen werden durch ein elektrisch aktives System - bestehend aus zwei Reihen von Kontakten im Kameragehäuse - abgetastet. Dabei wird über je einen Kontakt pro Reihe Strom eingeleitet, und über die in der Reihe folgenden Kontakte kann dann je nach abgetastetem Feld (leitfähig oder nicht leitfähig) ein Stromfluß detektiert werden oder nicht. Die jeweilige Kombination der stromführenden Kontakte ergibt dann die entsprechende Information, die von der Camera verarbeitet wird.

Bisher sind die Patronenhülsen direktbedruckt. Die CAS-Codierung wird dabei durch die Leitfähigkeit des Hülsenmaterials erreicht, das an den Stellen, die nicht leitend sein sollen, durch elektrisch isolierende Druckfarben abgedeckt wird, so daß beim Einlegen der Patrone in den Fotoapparat über die Kontakte des CAS-Systems an diesen Stellen kein Strom fließen kann.

Bei einer Anzahl von Hausmarken werden die Patronenhülsen mit einer Kombination von Direktdruck und Haftetikett ausgestattet, wobei die CAS-Codierung bislang in keinem Fall im Etikett integriert werden konnte, sondern immer über den Direktdruck realisiert wurde.

Die Etikettierung erfolgt in diesen Fällen jeweils nach der Montage der Patronen, so daß das Etikett als solches erkennbar ist und hinsichtlich der Gestaltung deutliche Abstriche gemacht werden müssen. Es besteht bei diesem Verfahren außerdem die Gefahr, daß Etikett und Codierung unterschiedliche Filmtypen aufweisen und damit verhängnisvolle Verwechslungen stattfinden können.

Die Patronen bestehen aus folgenden Komponenten: Patronenhülse, Wickelachse, Deckel, Boden und Dichtlippen aus Filz an der Filmaustrittsöffnung.

Die Patronenhülsen werden aus einem 0,3 mm dicken, verchromten Stahlblech geformt. Die Bedruckung der Bleche erfolgt im Offsetdruck oder einer Kombination von Offsetdruck mit Siebdruck, wobei im Bereich der CAS-Codierung in jedem Fall eine spezielle, hochkratzfeste, elektrisch nicht leitende Druckfarbe mehrfach (mindestens zweimal) übereinander gedruckt wird.

Die nicht leitende Druckfarbe, die festgelegte CAS-Felder isoliert, muß die in der Praxis auftretende Scheuerbeanspruchung durch die Kontakte unbeschadet überstehen, da sonst durch unbeabsichtigten Stromfluß Fehlinformationen ausgelesen werden und der Film falsch belichtet wird. Die hohe Farbschichtdicke des mehrmaligen Übereinanderdrucks einer speziellen hochkratzfesten Druckfarbe ist demnach im Bereich der CAS-Codierung durch die Notwendigkeit, eine hohe Scheuerfestigkeit zu erreichen, unabdingbar.

Als nächster Schritt werden am bedruckten Blech die für die Formung der Filmöffnung notwendigen Ausstanzungen durchgeführt und dann das Blech in für die Patronenmontagemaschine geeignete Streifen geschnitten. Die Streifen werden so dem Filmhersteller angeliefert. Alternativ erfolgt das Ausstanzen der Lippen für die Filmöffnung und der Zuschnitt in Streifen erst beim Filmhersteller.

Dort werden die vorgefertigten Blechstreifen vom Stapel in die Montagemaschine eingeführt und links und rechts die Dichtlippen von der Rolle zugeführt und verklebt (teilweise werden die Dichtlippen auch bereits vorher in einem separaten Arbeitsgang aufgebracht). Nach Abtrennen eines Einzelzuschnitts vom Streifen wird dieser zur Hülse gebogen und die Patrone durch Einfügen der Wickelachse und Aufbördeln von Boden- und Deckelteil komplettiert.

Die Beschickung der Patronen mit dem fotografischen Film erfolgt entweder in einem separaten Arbeitsgang nach Fertigstellung der Patrone oder in Verbindung mit dem Einfügen der Wickelachse.

Fotografische Filme werden in einer großen Anzahl an Sorten angeboten: Farbnegativfilme, Schwarz-Weiß-Filme, Diafilme, verschiedene Filmempfindlichkeiten, verschiedene Filmlängen, Sonderkonfektionierungen für Promotionzwecke, Hausmarken usw. Ein Sortiment von mehr als 100 Sorten, bis zu 250, ist daher für einen Filmhersteller normal.

Damit verbunden ist das logistische Problem, für die einzelnen Sorten die entsprechend bedruckten Blechstreifen zum geforderten Zeitpunkt und in der geforderten Menge verfügbar zu haben. Dies bedeutet, daß die gängigsten Sorten (normalerweise ca. 20) ständig in ausreichender Menge auf Lager gehalten werden und weniger gängige Sorten rechtzeitig bestellt werden müssen.

Da die Blechzuschnitte schwer und voluminös sind, wird so eine große Lagerkapazität beansprucht, die hohe Kosten verursacht. Wird andererseits die Lagerhaltung auf ein Minimum reduziert, leidet automatisch die Flexibilität darunter, da nicht vorrätige Sorten erst beschafft werden müssen.

Bei Verwendung eines Etiketts werden Blech und Druck voneinander getrennt, indem der Druck und die Ausbildung der Grenze vollständig auf ein Haftetikett aufgebracht wird. Die Lagerhaltung läßt sich an die Kapazität der Patronenmontage anpassen, d. h. auf ein Minimum zurückschrauben. Im Idealfall läßt sich die Lagerung des Patronenmaterials auf eine, nämlich unbedruckte Sorte reduzieren, weil die Sorten erst durch die Etikettierung festgelegt werden. Die Lagerung der Ausstattung für die einzelnen Sorten kann kompakt - und damit platz- und kostensparend - in Etikettenrollen erfolgen.

Da der Direktdruck entfällt, besteht keine Notwendigkeit mehr, in den dafür vorgegebenen, aufwendig zu handhabenden Formaten zu arbeiten, sondern das Blech kann als Endlosband direkt der Patronenfertigung zugeführt werden.

In weiteren Schritten ist auch der Ersatz der Blechpatronen durch vorgefertigte Kunststoffpatronen denkbar, da die Leitfähigkeit des Patronenmaterials nicht mehr zwingend genutzt werden muß.

Durch die Etikettierung der Filmpatronen besteht die Möglichkeit, die Scheuerfestigkeit neben dem üblichen Verfahren des Übereinanderdrucks von hochkratzfesten Spezialfarben auch durch eine Überlaminierung oder Kaschierung zu erreichen, oder durch partielles Aufbringen einer leitfähigen Schicht nur in den entsprechenden Bereichen, die leitfähig sein sollen, als funktionales Kriterium unerheblich zu machen.

Dadurch ist die Etikettierung verbunden mit einer enormen Erweiterung der möglichen Gestaltungsformen bis hin zum hochwertigen autotypischen Druck, wodurch sich das Etikett ansprechend und werbewirksam gestalten läßt, z.B. mehrfarbig, hochglänzend, mit Verlaufsdarstellung. Das Etikett kann darüber hinaus mit einem optisch abtastbaren Strichcode versehen sein.

Es wurde versucht, auf Filmpatronen vorhandene CAS-Codierungen mit einem eine andere Codierung tragenden Haftetikett zu überkleben, um die abgetastete Filmempfindlichkeit zu ändern. Diese Haftetiketten enthalten eine einzige ungeschützte, der Korrosion ausgesetzte Metalischicht, oder eine einzige, nichtmetallische Trägerschicht, die partiell mit empfindlicher und ungeschützter leitfähiger Farbe bedruckt ist. Solche Etiketten mögen zum gelegentlichen Ändern der Filmempfindlichkeit ausreichen, sind jedoch zur serienmäßigen Verwendung bei der Massenfertigung von Filmpatronen nicht zuverlässig genug.

Aus der EP 143 755 A2 ist ein gattungsgemäßes Haftetikett bekannt, dessen leitfähige Schicht aus ungeschützter Aluminiumfolie oder Aluminiumrohfolie besteht.

Aufgabe der Erfindung ist es daher, eine Codierung für eine Filmpatrone aufzuzeigen, welche die genannten Nachteile vermeidet.

Eine Lösung der Aufgabe besteht gemäß Anspruch 1 darin, daß die leitfähige Schicht von einer weiteren leitfähigen, insbesondere oxidationshemmenden Schutzschicht bedeckt ist. Die Schutzschicht ist bevorzugt derart ausgebildet, daß sie die Oxidation der darunter liegenden leitfähigen Schicht hemmt und selbst entweder nicht oxidiert oder dessen Oxid die Leitfähigkeit nicht oder nur minimal beeinträchtigt. Durch diese Maßnahme läßt sich zuverlässig eine etwaige Oxidation der elektrisch leitfähigen Schicht verhindern und hierdurch die Abtastsicherheit der Codierung erhöhen. Darüber hinaus werden durch Oxidation bedingte Verfärbungen der Metallschicht, etwa Grünspan bei einer kupferhaltigen Metallschicht, vermieden. Es werden daher Schutzschichten verwendet, die eine Oxidation der darunter liegenden leitfähigen Schicht hemmen, und selbst entweder nicht oxidieren oder deren Oxid die Leitfähigkeit bzw. Optik nicht oder nur minimal beeinträchtigen.

Die Schutzschicht kann als metallische Schicht auf die leitfähige Schicht aufgedampft sein oder aufgesputtert, plattiert, aufgalvanisiert oder in anderer Weise elektrochemisch aufgebracht sein. Die Metallbedampfung kann aus Aluminium oder Chrom bestehen. Die aufgesputterte Beschichtung kann aus Gold, Silber, Chrom, Nirostastahl, Titan oder Indiumzinnoxidlegierung bestehen.

Diese Schichten können sehr dünn aufgetragen werden und sind - gegenüber eines denkbaren Einsatzes als leitfähige Basisschicht - hinsichtlich der Kosten vertretbar. Durch die darunter liegende leitfähige Basisschicht bleibt darüber hinaus die Sicherheit gegen mechanische Beanspruchung bestehen.

Aufgedampftes oder gesputtertes Aluminium hat gegenüber gewalztem Aluminium eine andere Kristallstruktur und baut eine wesentlich dünnere Oxidschicht auf, die die Leitfähigkeit nur minimal beeinträchtigt.

Alternativ kann die Schutzschicht in Form einer lösungsmittelhaltigen Farbe bzw. eines solchen Lacks auf die leitfähige Schicht aufgebracht, insbesondere aufgedruckt sein. Als lösungsmittelhaltige Farbe ist geeignet eine solche mit Silberpigmenten, Graphitpigmenten, Nickelpigmenten und/oder Kupferpigmenten als leitfähigen Bestandteilen. Anstelle eines lösungsmittelhaltigen Lacks, der durch Ausdunstung auftrocknet, ist auch ein strahlenhärtender, insbesondere UV-strahlenhärtender Lack bzw. eine solche Farbe geeignet.

Darüber hinaus kann die Schutzschicht mittels Plattierung, Galvanisierung oder elektrochemisch aufgebracht werden.

Die elektrisch leitfähige Schicht kann auf einem nichtleitenden Trägermaterial aufliegen und mit diesem einen Verbund bilden, insbesondere einer weichen oder harten Aluminiumfolie einer Dicke von 8 bis 30 µm mit einer biaxial orientierten Polypropylen- bzw. Polyesterfolie einer Dicke von 12 bis 60 µm. In diesem Verbund kann das elektrisch leitfähige Material auch aus weicher oder harter Kupferfolie oder weicher oder harter Folie aus einer Legierung von Kupfer und Zink, Nickel, Eisen und/oder Beryllium einer Dicke von 8 bis 30 µm und einer biaxial orientierten Polypropylen- bzw. Polyesterfolie einer Dicke von 12 bis 60 µm bestehen.

Solche Verbundmaterialien ergeben eine zuverlässig abtastbare und haltbare Codierung bei stabilem Trägermaterial, so daß bei der serienmäßigen Verwendung bei der Massenfertigung von Filmpatronen keine Verformungsgefahr der Etiketten besteht und bei Verwendung die Codierung zuverlässig abtastbar ist.

Das elektrisch leitfähige Material kann aus einer weichen oder harten Aluminiumfolie einer Dicke von 15 bis 80 µm bestehen. Alternativ kann das elektrisch leitfähige Material auch aus weicher oder harter Kupferfolie oder weicher oder harter Folie aus einer Legierung von Kupfer und Zink, Nickel, Eisen und/oder Beryllium einer Dicke von 15 bis 80 µm bestehen.

Das Trägermaterial des Haftetiketts kann auch aus Papier oder Kunststoffolie gebildet werden. Im Fall der Kunststoffolie ist eine Dicke von 25 bis 120 µm bevorzugt, bei biaxial orientierter Polyesterfolie eine Dicke von 35 bis 70 µm, und bei biaxial orientierter Polypropylenfolie eine Dicke von 50 bis 70 µm. Im Fall eines Verbunds kann das Trägermaterial aus mindestens zwei Schichten aus Papier und Kunststoffolie oder zwei Kunststoffolien einer Gesamtdickevon 20 bis 120 µm bestehen, insbesondere aus zwei Folien aus biaxial orientiertem Polyester einer Gesamtdicke von 35 bis 70 µm. Das Trägermaterial aus Papier hat bevorzugt eine flächenbezogene Masse von 40 bis 150 g/m², insbesondere 50 bis 80 g/m².

Eine kostengünstige Alternative für das Trägermaterial ist eine biaxial gereckte, mit Vakuolen versehene Polypropylenfolie einer Dicke von 35 bis 60 µm.

Zum Schutz vor Beschädigungen ist bevorzugt die elektrisch nicht leitfähige Schicht wenigstens teilweise von einer im Bereich der von der nicht leitfähigen Schicht freien leitfähigen Schicht ausgesparten, nicht leitfähigen Kaschier- oder Laminierfolie verdeckt. Eine Kaschierung bzw. Laminierung, idealerweise mit biaxial orientierter Polypropylenfolie, eröffnet den Vorteil, daß ein sehr dünnes Basismaterial, vorzugsweise geschäumte Polypropylenfolie mit einer Dicke von 35 bis 50 µm eingesetzt werden kann und ein Teil der Verformungsarbeit durch die flexible Verbindung zwischen den Folie aufgenommen wird. Im Fall einer geschäumten oder mit Vakuolen versehenen Polypropylenfolie o.g. Dicke als Trägermaterial gewährleistet die Kaschierung die für die Verarbeitung erforderliche Biegesteifigkeit. Diese Ausführung ist besonders preisgünstig.

Die elektrisch leitfähige Schicht kann auf ein Trägermaterial aufgedruckt sein oder aus elektrisch leitfähiger Prägefolie, insbesondere Heißprägefolie, aufgebracht sein.

Trägt das Haftetikett wenigstens zwei voneinander getrennte leitfähige Teilflächen, die durch einen Steg aus elektrisch leitfähigem Material miteinander verbunden sind, wird bevorzugt dieser Steg anschließend isolierend abgedeckt, damit die wenigstens zwei elektrisch leitfähigen Teilflächen nicht als eine durchgehende Fläche erkannt werden. Die isolierende Abdeckung des Stegs läßt sich durch einfaches Aufdrucken einer nichtleitenden Farbe erreichen oder durch eine nicht leitende Kaschierfolie, die nur im Bereich der leitfähigen Teilflächen ausgespart ist und den Steg isolierend abdeckt. Die Stege können so verlaufen, daß die Stege Kontakte der Kamera nicht berühren können und somit die Scheuerfestigkeit der nicht leitenden Farbe nur noch geringe Bedeutung hat.

Das Trägermaterial des Haftetiketts kann eine elektrisch leitfähige Außenfläche aufweisen, wobei eine einer elektrisch nicht leitfähigen Teilfläche entsprechende Fläche des Haftetiketts die elektrisch nicht leitfähige Schicht trägt. Bevorzugt besteht das Trägermaterial des Haftetiketts selbst aus elektrisch leitfähigem Material, insbesondere aluminiumkaschiertem Papier oder Kunststoff einer Dicke bis 70 µm. Bevorzugt ist dann die nicht leitfähige Beschichtung aufgedruckt oder durch eine Kaschierfolie aus nicht leitfähigem Material gebildet, die im Bereich der leitfähigen Teilflächen Aussparungen aufweist.

Die Etikettierung erfolgt vorzugsweise unmittelbar vor dem Abtrennen der Einzelzuschnitte von einem Blechstreifen und der Hülsenformung in der Montageeinheit, das heißt auf den noch flachliegenden Blechstreifen. Dadurch kann das Etikett so gestaltet werden, daß der obere und untere Etikettenrand unter den Deckel- und Bodenbördelungen verschwindet und so das Etikett als solches auf Anhieb nicht erkennbar ist.

Dies setzt voraus, daß das Etikettenmaterial die bei den folgenden Verarbeitungsschritten geleistete Verformungsarbeit ohne Beeinträchtigung aufnehmen kann. Bei der Formung kann es durch die im Etikettenmaterial auftretende Zugspannung zur Rückorientierung oder zum Bruch des Etikettenmaterials kommen. Die auftretenden Kräfte können sich auch in Randabhebungen der Etiketten und Distorsionen im Etikettenmaterial oder Druckbild auswirken.

Es werden deshalb Etikettenmaterialien und Druckfarben eingesetzt, die ausreichend flexibel sind, um die Verformungsarbeit ohne Zerstörungen aufzunehmen und gleichzeitig einen geringen Anteil an reversibler Verformung aufweisen. Die Voraussetzungen erfüllen möglichst dünne flexibel kaschierte Verbunde aus biaxial orientierten Polyesterfolien, sowie aluminiumkaschiertes Papier. Hinsichtlich der Druckfarben sind flexibel bleibende Systeme, wie Tiefdruck und konventioneller Siebdruck, zu bevorzugen.

Alternativ besteht auch die Möglichkeit, die fertige Patrone zu etikettieren, wobei das Etikett dann nicht unter den Bördelungen von Deckel und Boden verschwindet und somit optisch als Etikett sichtbar bleibt. Die Verformungsbeanspruchung ist bei diesem Verfahren dagegen auf ein Minimum reduziert.

Die Applikation der Etiketten erfolgt idealerweise automatisch von der Rolle - ausgerüstet mit einem Haftklebstoff und angeordnet auf einem Trägerband. Diese Form der Aufbringung erlaubt hohe Maschinengeschwindigkeiten bei gleichzeitig engen Toleranzen hinsichtlich der Positionierung.

Selbstverständlich kann diese Entwicklung auch bei anderen, gleich oder ähnlich aufgebauten Code-Systemen Verwendung finden, deren Codierungsflächen unterschiedliche physikalische Eigenschaften haben, z.B. Farben, Dicken oder dgl. Die Erfindung ist auch bei anderen Objekten als Filmpatronen anwendbar.

Es können eine Vielzahl von erfindungsgemäßen Haftetiketten auf einem gemeinsamen Trägerband angeordnet sein, zur automatischen Applikation durch einen Haftetikettenspender.

Zur Herstellung einer mit einem erfindungsgemäßen Etikett versehenen Filmpatrone kann man auf einen sich in seiner Längsrichtung bewegten Blechstreifen ein Band aus Etikettenmaterial aufbringen und dann den Blechstreifen gemeinsam mit dem darauf haftenden Etikettenband in einzelne Zuschnitte zur Bildung jeweils einer Filmpatronenhülse trennen.

Alternativ kann man auf einen sich in seine Längsrichtung bewegten Blechstreifen eine Vielzahl separater Etiketten hintereinander aufbringen und dann den Blechstreifen zwischen den auf ihm haftenden Etiketten in einzelne Zuschnitte zur Bildung jeweils einer Filmpatronenhülse trennen.

Zur Etikettierung fertiger Patronen werden die auf einem gemeinsamen Trägerband haftenden separaten Etiketten an den oberen Teil der Filmaustrittsöffnung angesetzt und dann der nachlaufende Etikettenteil durch Drehung der Patrone und eine dagegen drückende Rolle auf diese aufgerollt.

Dies ermöglicht die Verarbeitung des Blechs als Endlosstreifen, die sehr viel leichter zu handhaben sind als die bisher verwendeten großen Blechtafeln.

Bevorzugte Herstellungsverfahren für Haftetiketten der eingangs genannten Art sind in den Ansprüchen 23 und 24 angegeben.

Die Erfindung wird nachfolgend anhand mehrerer Ausführungsbeispiele unter Hinweis auf die beigefügten Zeichnungen beschrieben.
Fig. 1 zeigt einen schematischen Schnitt durch ein Haftetikett;
Fig. 2 zeigt eine Anordnung zum Übertragen eines Haftetiketts auf eine Filmpatronenhülse; und
Fig. 3 zeigt eine weitere Anordnung zum Übertragen eines Haftetiketts auf eine Filmpatronenhülse.
Fig. 4 zeigt eine Anordnung zum Aufbringen eines durchgehenden Etikettenbands auf einem Blechstreifen zur Herstellung von Filmpatronenhülsen;
Fig. 5 zeigt eine andere Anordnung zum Überführen von auf einem gemeinsamen Trägerband haftenden Einzeletiketten auf einen Blechstreifen zur Herstellung von Filmpatronenhülsen.

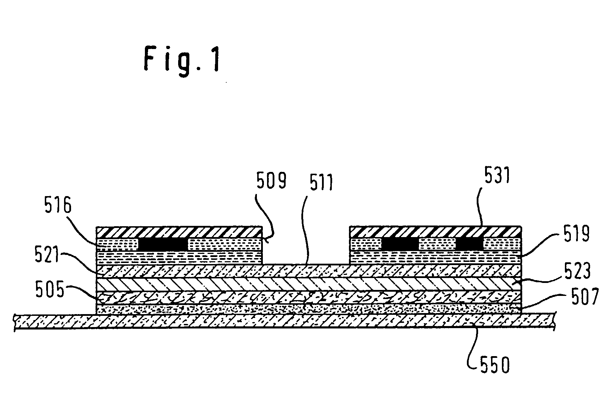

Fig. 1 zeigt im schematischen Schnitt eine Ausführung des Haftetiketts. Eine Trägerschicht 505 aus nicht leitendem Material, etwa Kunststoffolie oder Papier, ist unterseitig mit Haftkleber 507 beschichtet und haftet auf einem silikonisierten Trägerband 550. Oberseitig ist die Trägerschicht 505 mit einer leitfähigen Schicht 523 versehen und bildet mit der Trägerschicht 505 einen Verbund. Sie besteht aus elekrisch leitfähigem Kunststoff, Aluminiumfolie, Aluminiumrohfolie, kupferhaltiger Folie mit Zink, Nickel, Eisen und/oder berylliumlegierter Kupferfolie einer Dicke von 80 bis 30 µm. Fehlt die Trägerschicht 505, verwendet man eine etwas dickere leitfähige Schicht einer Dicke von 15 bis 80 µm.

Zum Schutz vor Oxidation, die eine reproduzierbare, sichere Abtastung der Codierung beeinträchtigt und sich u. U. verfärben würde, ist die leitfähige Schicht 523 von einer oxidationshemmenden Schicht 521 geschützt, in Form einer Metallbedampfung aus Aluminium oder einer aufgesputterten Beschichtung aus Gold, Silber, Nirostastahl, Titan oder Indiumzinnoxidlegierung. Möglich ist auch ein lösungsmittelhaltiger Lack oder ein strahlenhärtender, etwa UV-härtender Lack mit Silberpigmenten, Graphitpigmenten, Nickelpigmenten oder Kupferpigmenten als leitfähigen Bestandteilen.

Die leitfähige Schutzschicht 521 ist von einer im Bereich der leitfähigen Teilfläche 511 ausgesparten Isolierschicht 519 verdeckt, die wiederum einen Aufdruck 516 trägt. Der Aufdruck 516 ist von einer im Bereich der leitfähigen Teilfläche 511 ausgesparten, nicht leitfähigen Kaschierfolie 531 geschützt. Die leitfähigen und nicht leitfähigen Teilflächen trennende Grenze, die die Codierung festlegt, ist mit 509 bezeichnet.

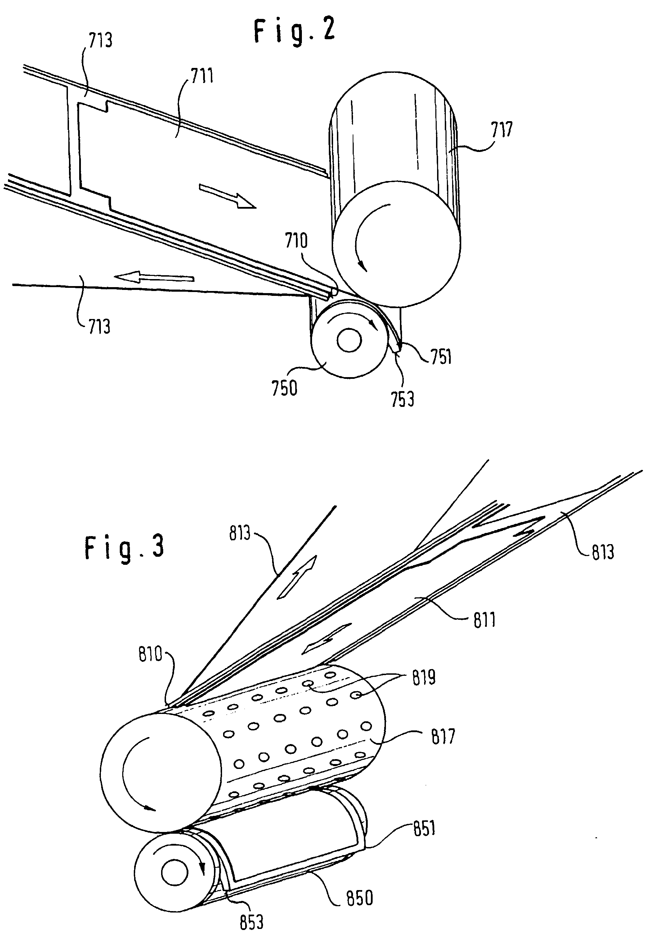

Fig. 2 zeigt eine Anordnung zur Übertragung von auf einem Trägerband 713 in Längsrichtung separat haftenden Haftetiketten 711 auf die Umfangsfläche einer Filmpatronenhülse 750. Das Trägerband 713 wird um eine feststehende Spendekante 710 herumgezogen, wobei sich das Haftetikett 711 von dem Trägerband 713 löst. Das Haftetikett 711 wird mit seinem Führungsende an einen radial vorstehenden Rand 751 der sich mit ihrer Filmaustrittsöffnung 753 voran drehenden Filmpatronenhülse 750 mittels einer Andruckrolle 717 angedrückt. Die Filmpatrone 750 befindet sich bezüglich des Haftetiketts 711 auf der gleichen Seite wie das Trägerband 713. Im Verlauf der Weiterdrehung wird das Haftetikett 711 auf den Umfang der Filmpatrone 750 übertragen.

Fig. 3 zeigt eine andere Möglichkeit der Übertragung eines auf einem Trägerband 813 in Längsrichtung separat haftenden Haftetiketts 811 auf die Umfangsfläche einer Filmpatronenhülse 850. Das Trägerband 813 wird um eine feststehende Spendekante 810 herumgezogen, wobei sich das Haftetikett 811 von dem Trägerband 813 löst und auf eine Saugtrommel 817 übertragen wird. Die Saugtrommel 817 enthält in ihrer Umfangsfläche an eine Unterdruckquelle angeschlossene Sauglöcher 819 und befindet sich auf der dem Trägerband 813 entgegengesetzten Seite des Haftetiketts 811. Von der sich drehenden Saugtrommel 817 wird das mit seiner Haftklebstoff tragenden Seite nach außen weisende Haftetikett 811 auf die Filmpatrone 850 übertragen. Das Haftetikett 811 wird mit seinem Führungsende zuerst an einen radial vorstehenden Rand 851 der sich mit ihrer Filmaustrittsöffnung 853 voran drehenden Filmpatronenhülse 850 angedrückt und im Verlauf der Weiterdrehung auf den Umfang der Filmpatronenhülse 850 übertragen.

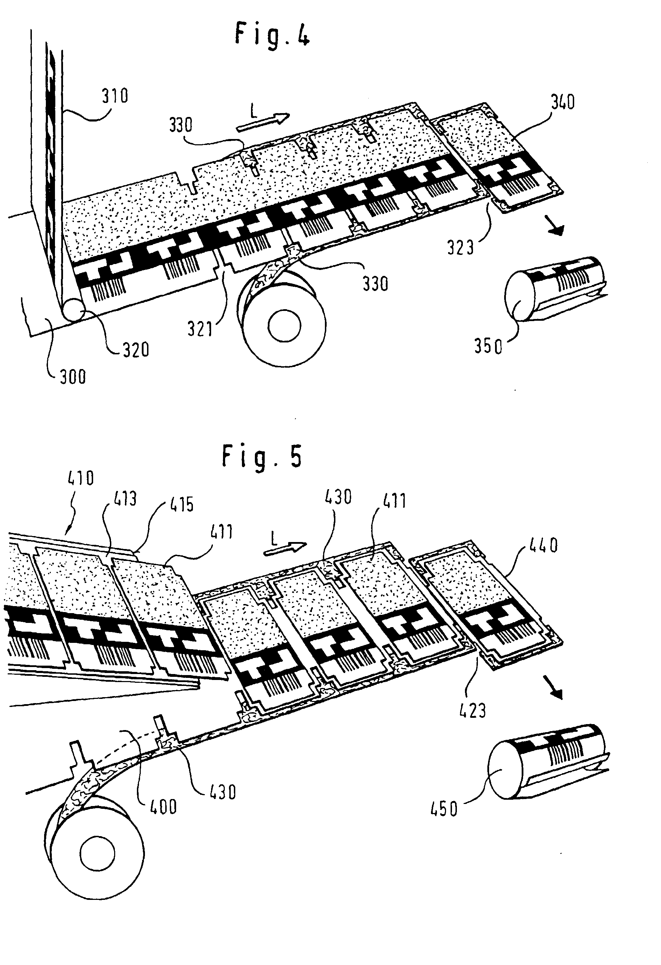

Fig. 4 zeigt schematisch eine Anordnung zur Etikettierung von Filmpatronen. Auf einem sich in seiner Längsrichtung L bewegten Endlosblechstreifen 300 wird ein Endlosband 310 aus Etikettenmaterial mittels einer Laminierrolle 320 aufgeklebt. Anschließend werden spätere Randbereiche zur Bildung einer Filmaustrittsöffnung der fertigen Filmpatrone bei 321 ausgestanzt. In einer nächsten Station werden entlang beider Längsränder der von dem Etikettenband 310 nicht beklebten Unterseite des Blechstreifens 300 Dichtfilzstreifen 330 aufgeklebt. Die Dichtfilze bilden später einen Licht- und Staubschutz der Filmaustrittsöffnung der fertigen Filmpatrone. Erst jetzt wird bei 323 der Blechstreifen 300 mitsamt dem auf ihm haftenden Etikettenband 310 und den Dichtfilzen 330 quer zur Laufrichtung L in eine Vielzahl von Zuschnitten 340 getrennt, um diese erst jetzt zu einer Filmpatronenhülse 350 zu formen.

Fig. 5 zeigt eine andere Anordnung der Filmpatronenetikettierung. Hier wird ein in seiner Längsrichtung L bewegter Stahlblechstreifen 400 mit Hilfe eines an sich bekannten automatischen Etikettenspenders 410 mit einer Vielzahl schon vorher voneinander getrennter Einzeletiketten 411 etikettiert. Wie bei der Ausführung nach Fig. 4 wird der Stahlblechstreifen 400 auf seiner nicht zu etikettierenden Seite entlang seiner Längsränder mit Dichtfilzstreifen 430 beklebt. Die von dem Etikettenspender 410 zugeführten Etiketten 411 befinden sich vor ihrer Übertragung auf den Blechstreifen 400 auf einem gemeinsamen Trägerband 413, das aus Papier, Polyesterfolie oder Polypropylenfolie gebildet ist, die gegen den Haftklebstoff des Etiketts abweisend ausgerüstet ist, beispielsweise mit einseitiger Silikonbeschichtung. Das Trägerband 413 wird um eine Spendekante 415 des Etikettenspenders 410 gezogen, wobei sich die Etiketten 411 von dem Trägerband 413 ablösen und auf diesen übertragen werden. Anschließend wird bei 423 der Blechstreifen 400 zwischen den mit Abstand aufgetragenen Etiketten 411 zusammen mit den Dichtfilzen 430 quer zur Laufrichtung L durchschnitten, so daß man eine Vielzahl von fertig etikettierten Blechabschnitten 440 erhält, die anschließend jeweils zu einer Filmpatronenhülse 450 geformt werden.

## Patentansprüche

1. Haftetikett für einen zu etikettierenden Gegenstand, wobei das Haftetikett durch die Lage wenigstens einer Grenze (509) zwischen einer elektrisch leitfähigen Schicht (523) und einer darüberliegenden, elektrisch nicht leitfähigen Schicht (519) Eigenschaften des Gegenstands maschinell lesbar codiert, **dadurch gekennzeichnet**, daß die leitfähige Schicht (523) von einer weiteren leitfähigen Schutzschicht (521), die die Oxidation der darunter liegenden leitfähigen Schicht (523) hemmt und selbst entweder nicht oxidiert oder deren Oxid die Leitfähigkeit im wesentlichen nicht beeinträchtigt, bedeckt ist.

2. Haftetikett nach Anspruch 1, **dadurch gekennzeichnet**, daß die Schutzschicht (521) eine auf die leitfähige Schicht (523) aufgedampfte, aufgesputterte, plattierte, aufgalvanisierte oder elektrochemisch aufgebrachte metallische Schicht ist.

3. Haftetikett nach Anspruch 1, **dadurch gekennzeichnet**, daß die Schutzschicht (521) aus lösungsmittelhaltiger Farbe bzw. Lack auf die leitfähige Schicht (523) aufgedruckt ist.

4. Haftetikett nach Anspruch 1, **dadurch gekennzeichnet**, daß die Schutzschicht (521) aus strahlenhärtender, insbesondere UV-strahlenhärtender Farbe bzw. Lack auf die leitfähige Schicht (523) aufgedruckt ist.

5. Haftetikett nach einem der vorstehenden Ansprüche, **dadurch gekennzeichnet**, daß die elektrisch leitfähige Schicht (523) mit einem nicht leitenden Trägermaterial (505) einen Verbund (523, 505) bildet.

6. Haftetikett nach einem der vorstehenden Ansprüche, **dadurch gekennzeichnet**, daß die elektrisch leitfähige Schicht (523) aus Aluminiumfolie oder Aluminium-Rohfolie oder einer kupferhaltigen Folie hergestellt ist.

7. Haftetikett nach einem der vorstehenden Ansprüche, **dadurch gekennzeichnet**, daß die elektrisch leitfähige Schicht (523) aus mit Zink, Nickel, Eisen und/oder Beryllium legierter Kupferfolie hergestellt ist.

8. Haftetikett nach Anspruch 6 oder 7, **dadurch gekennzeichnet,** daß die elektrisch leitfähige Schicht (523) eine Dicke von 8 bis 30 µm bei auf nicht-leitendem Trägermaterial (505) aufliegender Folie und 15 bis 80 µm bei einlagigem Material aufweist.

9. Haftetikett nach einem der vorstehenden Ansprüche, **dadurch gekennzeichnet**, daß die elektrisch nicht leitfähige Schicht (519) wenigstens teilweise von einer im Bereich der von der nicht leitfähigen Schicht (519) freien leitfähigen Schicht (523) ausgesparten, nicht leitfähigen Kaschier- oder Laminierfolie (531) verdeckt ist.

10. Haftetikett nach Anspruch 5, **dadurch gekennzeichnet**, daß die elektrisch leitfähige Schicht (523) auf das nicht-leitende Trägermaterial (505) aufgedampft oder aufgesputtert ist.

11. Haftetikett nach Anspruch 10, **dadurch gekennzeichnet**, daß das Material der elektrisch leitfähigen Schicht (523) gewählt ist aus Aluminium, Kupfer, mit Zink, Nickel, Eisen und/oder Beryllium legiertem Kupfer, Chrom, Gold, Silber, Nirostastahl, Titan und Indium-Zinn-Oxid.

12. Haftetikett nach Anspruch 1, **dadurch gekennzeichnet**, daß die elektrisch leitfähige Schicht (523) aus elektrisch leitfähigem Kunststoff gebildet ist.

13. Haftetikett nach einem der Ansprüche 5 bis 11, **dadurch gekennzeichnet**, daß das Trägermaterial (505) des Haftetiketts aus einem Verbund einer Papierschicht mit einer Kunststoffolie oder aus zwei Kunststoffolien gebildet ist, die zum Ausgleich von Verspannungen durch die Etikettierung auf einem gekrümmten Gegenstand flexibel miteinander verbunden sind.

14. Haftetikett nach einem der Ansprüche 5 bis 13, **dadurch gekennzeichnet**, daß das Trägermaterial (505) aus Papier einer flächenbezogenen Masse von 40 bis 150 g/m² besteht.

15. Haftetikett nach Anspruch 13, **dadurch gekennzeichnet**, daß das Trägermaterial (505) aus biaxial orientierter Polypropylenfolie einer Dicke von 50 bis 70 µm, besteht.

16. Haftetikett nach Anspruch 1, **dadurch gekennzeichnet**, daß das Trägermaterial (505) des Haftetiketts aus einer biaxial gereckten, Vakuolen aufweisenden Polypropylenfolie einer Dicke von 35 bis 60 µm besteht.

17. Haftetikett nach Anspruch 9, **dadurch gekennzeichnet**, daß die Laminier- oder Kaschierfolie (531) durch biaxial orientierte Polypropylenfolie gebildet ist.

18. Haftetikett nach einem der Ansprüche 1 bis 17, **dadurch gekennzeichnet**, daß wenigstens eine der elektrisch leitfähigen Teilflächen bzw. Schichten von der elektrisch nicht leitfähigen Teilfläche bzw. Schicht in Draufsicht allseits umgeben ist.

19. Haftetikett nach einem der Ansprüche 1 bis 18, **dadurch gekennzeichnet**, daß es neben den elektrisch leitfähigen und nicht leitfähigen Teilflächen bzw. Schichten Flächenbereiche für vom Verwender lesbare Produktinformationen oder Strichcodes trägt.

20. Filmpatrone mit einem Haftetikett nach einem der Ansprüche 1 bis 19.

21. Verfahren zur Herstellung von Haftetiketten nach Anspruch 9, das aufeinanderfolgend die Schritte aufweist:
- Ausstanzen der mittels einer Haftkleberschicht auf einem haftabweisenden Trägerband haftenden Laminier- oder Kaschierfolie (531) einschließlich der Haftkleberschicht der Kaschier- oder Laminierfolie im Bereich der späteren leitfähigen Teilfläche (511) des Gegenstands oder des Haftetiketts, nicht jedoch des Trägerbands,
- Abziehen des Trägerbands mit dem zuvor ausgestanzten Material von der Laminier- oder Kaschierfolie (531),
- Aufbringen der im vorhergehenden Schritt gestanzten Laminier- oder Kaschierfolie (531) auf ein auf einem weiteren Trägerband haftendes Band von die Schutzschicht (321) aufweisendem Etikettenmaterial,
- Ausstanzen eines Umfangsrands der zu bildenden Einzeletiketten aus dem im vorherigen Schritt bereitgestellten Band von Etikettenmaterial,
- Abziehen der zwischen den im vorherigen Schritt ausgestanzten Einzeletiketten verbleibenden Matrix aus Etikettenmaterial zur Freistellung der auf dem Trägerband haftenden, die ausgestanzte Laminier- oder Kaschierfolie (531) tragenden Einzeletiketten.

22. Verfahren zur Herstellung von Haftetiketten nach Anspruch 9, das aufeinanderfolgend die Schritte aufweist
- Ausstanzen der Laminier- oder Kaschierfolie (531) im Bereich der späteren leitfähigen Teilfläche (511) des Gegenstands oder des Haftetiketts mit einem Stanzwerkzeug,
- Entfernen des zuvor ausgestanzten Materials von der Laminier- oder Kaschierfolie (531) durch das Stanzwerkzeug oder durch Druckluft,
- Aufbringen der im vorigen Schritt bereitgestellten, gestanzten Laminier- oder Kaschierfolie (531) auf ein auf einem weiteren Trägerband haftendes Band von Etikettenmaterial,
- Ausstanzen eines Umfangsrands der zu bildenden Einzeletiketten aus dem im vorherigen Schritt bereitgestellten Band von die Schutzschicht (521) aufweisendem Etikettenmaterial,
- Abziehen der zwischen den Einzeletiketten verbleibenden Matrix aus Etikettenmaterial zur Freistellung der auf dem Trägerband haftenden, die ausgestanzte Laminier- oder Kaschierfolie (531) tragenden Einzeletiketten.

23. Filmpatrone mit einem nach Anspruch 21 oder 22 hergestellten Haftetikett.

24. Verwendung eines nach einem der Ansprüche 1 bis 19 ausgebildeten oder nach Anspruch 21 oder 22 hergestellten Haftetiketts zur Herstellung einer Filmpatrone durch folgende Schritte:
- Aufkleben eines Endlosbands (310) aus die Schutzschicht (521) aufweisendem Etikettenmaterial auf die Oberseite eines in Längsrichtung (L) bewegten Endlosblechstreifens (300),
- Ausstanzen von Randbereichen (321) des Endlosblechstreifens (300) zur Bildung einer späteren Filmaustrittsöffnung der Filmpatrone,
- Aufkleben von Dichtfilzstreifen (330) auf die Unterseite der Randbereiche (321) des Endlosblechstreifens (300),
- Auftrennen des Endlosblechstreifens (300) einschließlich des Endlosbands (310) aus Etikettenmaterial in eine Vielzahl von die Haftetiketten tragenden Zuschnitten (340) und
- Formen von Filmpatronen (350) aus den die Haftetiketten tragenden Zuschnitten (340).

25. Verwendung eines nach einem der Ansprüche 1 bis 19 ausgebildeten oder nach Anspruch 21 oder 22 hergestellten Haftetiketts zur Herstellung einer Filmpatrone durch folgende Schritte:
- Ziehen eines Trägerbands (413) mit einer Vielzahl auf ihm separat haftender, die Schutzschicht (521) aufweisender Haftetiketten (411) um eine Spendekante (415), wobei sich die Haftetiketten (411) von dem Trägerband (413) lösen,
- Übertragen der abgelösten Haftetiketten (411) auf die Oberseite eines Endlosblechstreifens (400),
- Aufkleben von Dichtfilzstreifen (430) auf die Unterseite der Ränder des Endlosblechstreifens (400),
- Auftrennen des die Haftetiketten (411) tragenden Endlosblechstreifens (400) in eine Vielzahl von Zuschnitten (440) und
- Formen von Filmpatronen (450) aus den die Haftetiketten tragenden Zuschnitten (440).

26. Verwendung eines nach einem der Ansprüche 1 bis 19 ausgebildeten oder nach Anspruch 21 oder 22 hergestellten Haftetiketts zur Etikettierung einer Filmpatrone durch folgende Schritte:
- Ziehen eines Trägerbands (713) mit einer Vielzahl auf ihm separat haftender, die Schutzschicht (521) aufweisender Haftetiketten (711) um eine Spendekante (710), wobei sich die Haftetiketten (711) von dem Trägerband (713) lösen,
- Andrücken jedes Haftetiketts (711) mit seinem Führungsende an einen radial vorstehenden, die Filmaustrittsöffnung (753) der Filmpatrone begrenzenden Rand (751) der sich mit ihrer Filmaustrittsöffnung (753) voran drehenden Filmpatrone (750),
- Übertragung des Haftetiketts (711) während Weiterdrehung der Filmpatrone (750) auf deren Umfangsfläche.

27. Verwendung eines nach einem der Ansprüche 1 bis 19 ausgebildeten oder nach Anspruch 21 oder 22 hergestellten Haftetiketts zur Etikettierung einer Filmpatrone durch folgende Schritte:
- Ziehen eines Trägerbands (813) mit einer Vielzahl auf ihm separat haftender, die Schutzschicht (521) aufweisender Haftetiketten (811) um eine Spendekante (810), wobei sich die Haftetiketten (811) von dem Trägerband (813) lösen,
- Übertragen jedes gelösten Haftetiketts (811) auf die Umfangsfläche einer auf der vom Trägerband (813) abgelegenen Seite des Haftetiketts (811) angeordneten, sich drehenden Saugtrommel (817) mittels Unterdruck in der Saugtrommel (817),
- Übertragen des Haftetiketts (811) von der Saugtrommel (817) auf die Umfangsfläche einer sich drehenden Filmpatrone (850).
